# EUROPÄISCHE PATENTANMELDUNG

(11) **EP 4 725 873 A1**
(43) Veröffentlichungstag der Anmeldung: **15.04.2026**
(21) Anmeldenummer: 25206762.4
(22) Anmeldetag: 06.10.2025
(51) Int. Cl.: B65G 17/32, B65G 17/48, B65G 19/02, B65G 19/26, B65G 47/84

(54) **FÖRDERER ZUM BEHÄLTERTRANSPORT UND ZUGEHÖRIGES BETRIEBSVERFAHREN**

(30) Priorität: 08.10.2024 DE 102024129026
(71) Anmelder: KRONES AG, 93073 Neutraubling (DE)
(72) Erfinder: LEIDEL, Marco, 93073 Neutraubling (DE)
(74) Vertreter: v. Bezold & Partner Patentanwälte - PartG mbB

(57) **Zusammenfassung**

Die Erfindung betrifft u.a. einen Förderer (18) zum Behältertransport für eine Behälterbehandlungsanlage (10). Der Förderer (18) weist ein umlaufendes Transportelement (20) und mehrere Mitnehmer (28) auf. Die Mitnehmer (28) sind voneinander beabstandet entlang des umlaufenden Transportelements (20) angeordnet und an dem umlaufenden Transportelement (20) zum Mitnehmen von Behältern (12) angebracht. Die Mitnehmer (28) sind relativ zu dem umlaufenden Transportelement (20) bewegbar.

## Beschreibung

### Technisches Gebiet

Die Erfindung betrifft einen Förderer zum Behältertransport für eine Behälterbehandlungsanlage. Die Erfindung betrifft ferner eine Behälterbehandlungsanlage mit dem Förderer. Die Erfindung betrifft zudem ein Verfahren zum Betreiben des Förderers oder der Behälterbehandlungsanlage.

### Technischer Hintergrund

Es ist bekannt, in einer Behälterbehandlungsanlage Förderer zum Transportieren von Behältern zwischen unterschiedlichen Maschinen der Anlage einzusetzen.

Beispielsweise kann bei einem Füller-Verschließer-Block der Füller eine andere Maschinenteilung aufweisen als der Verschließer. Eine Förderkette kann den Füller und den Verschließer miteinander verbinden. Herkömmlich ist der Teilungsabstand in der Förderkette durch Anordnung der Mitnehmer fest definiert. D.h., jeder Behälter, der von der Förderkette gefördert wird, hat denselben Teilungsabstand. Beispielsweise kann der Füller eine Teilung von 87 mm, die Förderkette eine Teilung von 92 mm und der Verschließer eine Teilung von 105 mm aufweisen. Es wird versucht, den Teilungsverzug zwischen dem Füller und dem Verschließer durch eine veränderte Geschwindigkeit an der Förderkette und bspw. speziell ausgelegte Führungsgarnituren im Füller und Verschließer auszugleichen.

DE 10 2020 116 779 A1 bezieht sich auf eine Behälterbehandlungsvorrichtung, insbesondere Füllmaschine zum Füllen von Dosen oder dergleichen Behälter mit einem flüssigen Füllgut. Dabei umfasst die Behälterbehandlungsvorrichtung einen ersten als Behältereinlauf ausgebildeten Transporteur, einen in Behandlungsrichtung nachgelagerten und um eine Maschinenachse umlaufenden Rotor mit mehreren Behandlungspositionen zur Behandlung der Behälter, sowie einen dem Rotor in Behandlungsrichtung wiederum nachgelagerten und als Behälterauslauf ausgebildeten zweiten Transporteur. Der zweite Transporteur ist dabei als Kettenförderer ausgebildet, der an einem endlos umlaufend angetriebenen Fördermittel zumindest einen mit dem Fördermittel mitbewegten Führungsfinger mit einem ersten und einem zweiten Führungsabschnitt aufweist, der die an den mehreren Behandlungspositionen des Rotors behandelten und noch unverschlossenen Behälter übernimmt.

Nachteilig am bekannten Stand der Technik kann sein, dass es, wenn bei der Maschinenauslegung von Füller und Verschließer ein zu großer Teilungssprung gewählt wird, zu Behälterhandhabungsproblemen an Füller und Verschließer kommen kann. Behälterbeschädigungen, Rausschwappen des Produktes usw. sowie Leistungsprobleme können die Folge falscher Auslegung sein.

Der Erfindung liegt die Aufgabe zu Grunde, eine verbesserte Technik zum Transportieren von Behältern zu schaffen, mit der sich vorzugsweise zumindest einige der oben genannten Nachteile überwinden lassen. Vorzugsweise soll die Technik dazu geeignet sein, eine verbesserte Handhabung der Behälter bei einem vergleichsweise großen Teilungssprung zwischen den mit dem Förderer zu verbindenden Vorrichtungen zu ermöglichen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft einen (z. B. Linear-) Förderer zum Behältertransport, vorzugsweise Dosentransport, für eine Behälterbehandlungsanlage. Der Förderer weist ein umlaufendes (geschlossenes) (z. B. Endlos-) Transportelement, vorzugsweise Transportkette (oder Transportriemen oder Transportband), auf. Der Förderer weist ferner mehrere (bewegbare) Mitnehmer auf, die voneinander beabstandet entlang des umlaufenden Transportelements angeordnet sind (z. B. seitlich neben dem umlaufenden Transportelement) und die an dem umlaufenden Transportelement zum Mitnehmen von Behältern, vorzugsweise jeweils eines Behälters, angebracht sind. Die mehreren Mitnehmer sind (jeweils) relativ zu dem umlaufenden Transportelement (z. B. mitnehmerindividuell) bewegbar (z. B. zum, vorzugsweise behälterindividuellen, Bewegen der Behälter parallel zu einer Längserstreckung des Transportelements).

Vorteilhaft ermöglicht es der Förderer, dass die Behälter oder sonstigen transportierten Objekte selbst bei einem vergleichsweise großen Teilungsverzug zwischen den durch den Förderer verbundenen Vorrichtungen sicher und schonend gehandhabt werden. Vorteilhaft können die Behälter durch eine Bewegung des jeweiligen Mitnehmers relativ zu dem umlaufenden Transportelement (z. B. einzeln) beschleunigt oder verzögert werden, insbesondere bei der Behälterübernahme und/oder der Behälterübergabe. Vorteilhaft kann damit die wegen der unterschiedlichen Teilungen implementierte Transportgeschwindigkeitsdifferenzen zwischen dem umlaufenden Förderer und der übergebenden bzw. übernehmenden Vorrichtung verringert oder sogar kompensiert werden. Dadurch können beispielsweise Behälterbeschädigungen aufgrund zu großer Teilungsunterschiede / Transportgeschwindigkeitsunterschiede vermindert werden. Besonders vorteilhaft an der vorgeschlagenen Technik ist, dass sie einfach in bestehenden Förderern nachgerüstet werden kann und dass sie flexibel an die jeweiligen Anforderungen angepasst werden kann.

In einem Ausführungsbeispiel sind die mehreren Mitnehmer relativ zu dem umlaufenden Transportelement verschwenkbar, vorzugsweise um eine jeweilige Hochachse. Alternativ oder zusätzlich sind die mehreren Mitnehmer relativ zu dem umlaufenden Transportelement verschiebbar, vorzugsweise in und entgegen einer Transportrichtung des Förderers. Vorteilhaft kann somit auf konstruktiv einfache Weise eine Verzögerung oder Beschleunigung der Behälter parallel zu der Transportrichtung erzielt werden, zum Beispiel bei der Übernahme/Übergabe der Behälter.

In einem weiteren Ausführungsbeispiel sind die mehreren Mitnehmer jeweils als, vorzugsweise schwenkbar und/oder verschiebbar gelagerte, Kragarme oder Anlagefinger ausgebildet. Vorteilhaft kann auf diese Weise eine sichere Abstützung der Behälter bei der Mitnahme durch die mehreren Mitnehmer ermöglicht werden.

In einer Ausführungsform weist der Förderer ferner mehrere Verbinder auf, die voneinander beabstandet entlang des umlaufenden Transportelements angeordnet sind und die die mehreren Mitnehmer an dem umlaufenden Transportelement anbringen, vorzugsweise jeweils mindestens einen der mehreren Mitnehmer. Vorteilhaft kann auf diese Weise eine sichere Anbindung der bewegbaren Mitnehmer an dem umlaufenden Transportelement ermöglicht werden.

In einer weiteren Ausführungsform sind die mehreren Verbinder fest (unbewegbar/fixiert/starr) mit dem umlaufenden Transportelement verbunden, vorzugsweise lösbar (z. B. mittels Schraub-, Steck,- Rast- oder Klemmverbindung), besonders bevorzugt durch Kettenglieder des umlaufenden Transportelements hindurch. Vorteilhaft kann damit eine sichere Anbindung der Verbinder mit dem umlaufenden Transportelement sowie besonders bevorzugt eine Nachrüstung der Verbinder mit den mehreren Mitnehmern ermöglicht werden.

In einer weiteren Ausführungsform sind die mehreren Mitnehmer jeweils an mindestens einem der mehreren Verbinder bewegbar, vorzugsweise verschwenkbar und/oder verschiebbar, gelagert. Vorteilhaft kann so auf konstruktiv einfache und zuverlässige Weise die Bewegbarkeit der Mitnehmer bereitgestellt werden.

In einer Ausführungsvariante weist der Förderer mehrere weitere (z. B. starre) Mitnehmer auf, die vorzugsweise voneinander beabstandet entlang des umlaufenden Transportelements angeordnet sind (z. B. seitlich neben dem umlaufenden Transportelement) und/oder die mit dem umlaufenden Transportelement zum Mitnehmen der Behälter, vorzugsweise jeweils eines Behälters, fest (unbewegbar/starr) verbunden sind. Vorzugsweise bilden jeweils einer der Mitnehmer und einer der weiteren Mitnehmer ein Mitnehmerpaar zum (z. B. abwechselnden) Mitnehmen eines der Behälter. Optional sind der Mitnehmer und der weitere Mitnehmer je Mitnehmerpaar übereinander angeordnet (z. B. mit dem Mitnehmer über dem weiteren Mitnehmer oder andersherum). Vorteilhaft können die weiteren Mitnehmer einen sicheren und verschleißarmen Transport der Behälter ermöglichen, wobei die bewegbaren Mitnehmer bevorzugt außer Eingriff von den Behältern sind. Bei der Behälterübernahme und/oder Behälterübergabe können vorteilhaft wiederum die bewegbaren Mitnehmer in Eingriff mit den Behältern sein, wobei die weiteren Mitnehmer bevorzugt außer Eingriff von den Behältern sind.

In einer weiteren Ausführungsvariante sind die weiteren Mitnehmer jeweils fest (unbewegbar/starr), vorzugsweise integral-einstückig, mit mindestens einem jeweiligen Verbinder verbunden, vorzugsweise auskragend von dem jeweiligen Verbinder. Vorteilhaft kann auf diese Weise eine konstruktiv einfache Ausführung der weiteren Mitnehmer ermöglicht werden.

In einer weiteren Ausführungsvariante wirken der Mitnehmer und der weitere Mitnehmer je Mitnehmerpaar derart zusammen (z. B. gesteuert durch eine/die mindestens eine Betätigungseinrichtung), dass der Mitnehmer den jeweils transportierten Behälter nur in einem Behältereinlaufabschnitt und/oder nur in einem Behälterauslaufabschnitt des Förderers abstützt, und/oder der weitere Mitnehmer den jeweils transportierten Behälter außerhalb von einem Behältereinlaufabschnitt und/oder einem Behälterauslaufabschnitt des Förderers, abstützt. Vorteilhaft kann auf diese Weise, wie bereits erwähnt, ein sicherer und verschleißarmer Transport sowie eine verbesserte Behälterübernahme und/oder Behälterübergabe ermöglicht werden.

In einem Ausführungsbeispiel weist der Förderer ferner mindestens eine, vorzugsweise stationäre, (z. B. mechanische, pneumatische, hydraulische, elektrische und/oder elektromagnetische) Betätigungseinrichtung auf, die mit den mehreren Mitnehmern zum Bewirken eines Bewegens desjeweiligen Mitnehmers relativ zu dem umlaufenden Transportelement in Wirkverbindung bringbar ist. Vorteilhaft kann mittels der mindestens einen Bewegungsvorrichtung die Bewegung der Mitnehmer und damit der Behälter zuverlässig und auf eine gewünschte Art und Weise sowie in einem gewünschten Abschnitt des Förderers ausgelöst werden.

In einem weiteren Ausführungsbeispiel weist die mindestens eine Betätigungseinrichtung mindestens eines auf von:
- mindestens eine (z. B. stationäre) Steuerkurve (z. B. in einem Behälterauslaufabschnitt des Förderers und/oder in einem Behältereinlaufabschnitt des Förderers), die die mehreren Mitnehmer beim Passieren zum Bewegen (z. B. Verschwenken und/oder Verschieben) relativ zu dem umlaufenden Transportelement beaufschlagt;
- mindestens einen (z. B. stationären) Steuernocken (z. B. in einem Behälterauslaufabschnitt des Förderers und/oder in einem Behältereinlaufabschnitt des Förderers), der die mehreren Mitnehmer beim Passieren zum Bewegen (z. B. Verschwenken und/oder Verschieben) relativ zu dem umlaufenden Transportelement beaufschlagt; und
- einen Aktor, vorzugsweise Elektroantrieb, je Mitnehmer, wobei der Aktor mit dem jeweiligen Mitnehmer zum Bewegen (z. B. Verschwenken und/oder Verschieben) des jeweiligen Mitnehmers verbunden ist.

Vorteilhaft können diese Ausführungsbeispiele für die mindestens eine Betätigungseinrichtung einerseits einen besonders zuverlässigen Betrieb ermöglichen und andererseits besonders flexibel an die jeweiligen Anforderungen der Anlage angepasst werden.

In einer Ausführungsform ist die mindestens eine Betätigungseinrichtung dazu konfiguriert, die mehreren Mitnehmer, vorzugsweise in einem Behälterauslaufabschnitt des Förderers, in einer Transportrichtung des Förderers relativ zu dem umlaufenden Transportelement zu bewegen (z. B. zu verschwenken und/oder zu verschieben), z. B. zum Beschleunigen des jeweils mitgenommenen Behälters relativ zu dem umlaufenden Transportelement, vorzugsweise in dem Behälterauslaufabschnitt. Alternativ oder zusätzlich kann die mindestens eine Betätigungseinrichtung bspw. dazu konfiguriert sein, die mehreren Mitnehmer, vorzugsweise in einem Behältereinlaufabschnitt des Förderers, entgegen einer Transportrichtung des Förderers relativ zu dem umlaufenden Transportelement zu bewegen (z. B. zu verschwenken und/oder zu verschieben), z. B. zum Verzögern des jeweils mitgenommenen Behälters relativ zu dem umlaufenden Transportelement, vorzugsweise in dem Behältereinlaufabschnitt. Vorteilhaft kann auf diese Weise eine besonders schonende Behälterübernahme bzw. Behälterübergabe trotz unterschiedlicher Teilungen und unterschiedlicher Transportgeschwindigkeiten ermöglicht werden.

In einer weiteren Ausführungsform sind die mehreren Mitnehmer jeweils mit einem Steuerelement zum Auslösen des Bewegens relativ zu dem umlaufenden Transportelement verbunden. Vorzugsweise ist das Steuerelement ein Steuerkurvenfolger, bevorzugt eine drehbare Steuerrolle oder ein Gleitstück, zum Folgen einer Steuerkurve oder eines Steuernockens zum Bewirken des Bewegens relativ zu dem umlaufenden Transportelement. Vorzugsweise tragen die mehreren Mitnehmer das jeweilige Steuerelement, vorzugsweise oberseitig oder unterseitig. Vorteilhaft kann auf diese Weise eine zuverlässige und konstruktiv einfache Betätigung der mehreren Mitnehmer ermöglicht werden.

Ein weiterer Aspekt betrifft eine Behälterbehandlungsanlage, vorzugsweise Dosenbehandlungsanlage. Die Behälterbehandlungsanlage weist eine erste (z. B. Rundläufer-) Vorrichtung, vorzugsweise (z. B. Rundläufer-) Füllvorrichtung zum Füllen von Behältern, auf. Die Behälterbehandlungsanlage weist eine zweite (z. B. Rundläufer-) Vorrichtung, vorzugsweise (z. B. Rundläufer-) Verschließvorrichtung zum Verschließen der Behälter, auf. Die Behälterbehandlungsanlage weist ferner einen Förderer wie hierin offenbart auf. Der Förderer ist mit der ersten Vorrichtung zum Übernehmen der Behälter von der ersten Vorrichtung und/oder mit der zweiten Vorrichtung zum Übergeben der übernommenen Behälter an die zweite Vorrichtung verbunden. Optional können eine (z. B. Maschinen-) Teilung der ersten Vorrichtung und eine (z. B. Maschinen-) Teilung der zweiten Vorrichtung unterschiedlich sein. Vorzugsweise kann eine (z. B. Maschinen-) Teilung des Förderers zwischen der Teilung der ersten Vorrichtung und der Teilung der zweiten Vorrichtung liegen. Vorteilhaft können mit der Behälterbehandlungsanlage die gleichen Vorteile erzielt werden, die bereits unter Bezugnahme auf den Förderer erläutert wurden.

Beispielsweise kann die zweite Vorrichtung eine Teilung aufweisen, die größer als eine Teilung der ersten Vorrichtung ist. Beispielsweise kann die Teilung der zweiten Vorrichtung um ≥ 10 mm, ≥ 15 mm oder ≥ 20 mm größer sein als die Teilung der ersten Vorrichtung.

Vorzugsweise kann die Behälterbehandlungsanlage zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie, ausgebildet sein. Die Behälterbehandlungsanlage kann beispielsweise eine Getränkeabfüllanlage sein.

Beispielsweise können die Behälter als Flaschen, Dosen, Kanister, Kartons, Flakons, Tuben usw. ausgeführt sein.

Ein weiterer Aspekt betrifft ein Verfahren zum Betreiben eines Förderers wie hierin offenbart oder einer Behälterbehandlungsanlage wie hierin offenbart. Das Verfahren weist auf:
- Transportieren der Behälter mittels des Förderers, vorzugsweise von einer (z. B. Rundläufer-) Füllvorrichtung zum Füllen der Behälter zu einer (z. B. Rundläufer-) Verschließvorrichtung zum Verschließen der Behälter;
- (z. B. behälterindividuelles / einzelnes) Bewegen der Behälter relativ zu dem umlaufenden Transportelement während des Transportierens, vorzugsweise am Ende und/oder am Anfang des Transportierens des jeweiligen Behälters, durch (z. B. mitnehmerindividuelles) Bewegen, vorzugsweise Verschwenken und/oder Verschieben, der Mitnehmer relativ zu dem umlaufenden Transportelement.

Vorteilhaft können mit dem Verfahren die gleichen Vorteile erzielt werden, die bereits unter Bezugnahme auf den Förderer erläutert wurden. Selbiges gilt für die untenstehend erläuterten bevorzugten Ausführungsbeispiele des Verfahrens.

In einem Ausführungsbeispiel ist mindestens eines erfüllt von:
- beim Bewegen werden die Behälter relativ zu dem umlaufenden Transportelement in einer Transportrichtung des umlaufenden Transportelements beschleunigt oder verzögert (relativ zu dem umlaufenden Transportelement);
- das Bewegen der Behälter relativ zu dem umlaufenden Transportelement erfolgt parallel zu einer Längserstreckung des Transportelements und/oder parallel zu einer Transportrichtung des Förderers;
- das Bewegen der Behälter relativ zu dem umlaufenden Transportelement erfolgt derart, dass eine Transportgeschwindigkeitsdifferenz zwischen dem Förderer und einer ersten (z. B. Rundläufer-) Vorrichtung (z. B. Füllvorrichtung), von der die Behälter von dem Förderer übernommen werden, zumindest teilweise kompensiert wird, und/oder dass eine Transportgeschwindigkeitsdifferenz zwischen dem Förderer und einer zweiten (z. B. Rundläufer-) Vorrichtung (z. B. Verschließvorrichtung), an die die Behälter von dem Förderer übergeben werden, zumindest teilweise kompensiert wird;
- das Bewegen der Mitnehmer relativ zu dem umlaufenden Transportelement erfolgt beim Übernehmen der Behälter, vorzugsweise von der Füllvorrichtung, entgegen einer Transportrichtung des Förderers, vorzugsweise zum Verzögern des Mitnehmers (und vorzugsweise des damit mitgenommenen Behälters) relativ zu dem umlaufenden Transportelement;
- das Bewegen der Mitnehmer relativ zu dem umlaufenden Transportelement erfolgt beim Übergeben der Behälter, vorzugsweise an die Verschließvorrichtung, in der Transportrichtung des Förderers, vorzugsweise zum Beschleunigen des Mitnehmers (und vorzugsweise des damit mitgenommenen Behälters) relativ zu dem umlaufenden Transportelement; und
- das Transportieren der Behälter von einem Behältereinlaufabschnitt des Förderers zu einem Behälterauslaufabschnitt des Förderers erfolgt mittels mehrerer weiterer (z. B. starrer) Mitnehmer des Förderers, die voneinander beabstandet entlang des umlaufenden Transportelements angeordnet sind (z. B. seitlich neben dem umlaufenden Transportelement) und die mit dem umlaufenden Transportelement zum Mitnehmen der Behälter, vorzugsweise jeweils eines Behälters, fest (unbewegbar/starr) verbunden sind.

Es versteht sich, dass alle hierin unter Bezugnahme auf den Förderer oder die Behälterbehandlungsanlage beschriebenen Merkmale auch in Kombination mit dem Verfahren offenbart und beanspruchbar sind, einzeln oder in jeglicher Kombination. Ebenso sind alle hierin unter Bezugnahme auf das Verfahren beschriebenen Merkmale auch in Kombination mit dem Förderer oder der Behälterbehandlungsanlage offenbart und beanspruchbar, einzeln oder in jeglicher Kombination.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Behälterbehandlungsanlage mit einem Förderer gemäß einem Ausführungsbeispiel;
- Figur 2: eine perspektivische Ansicht eines Abschnitts eines beispielhaften Förderers;
- Figur 3: eine weitere perspektivische Ansicht des Abschnitts des beispielhaften Förderers; und
- Figur 4: eine Draufsicht auf den Abschnitt des beispielhaften Förderers.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

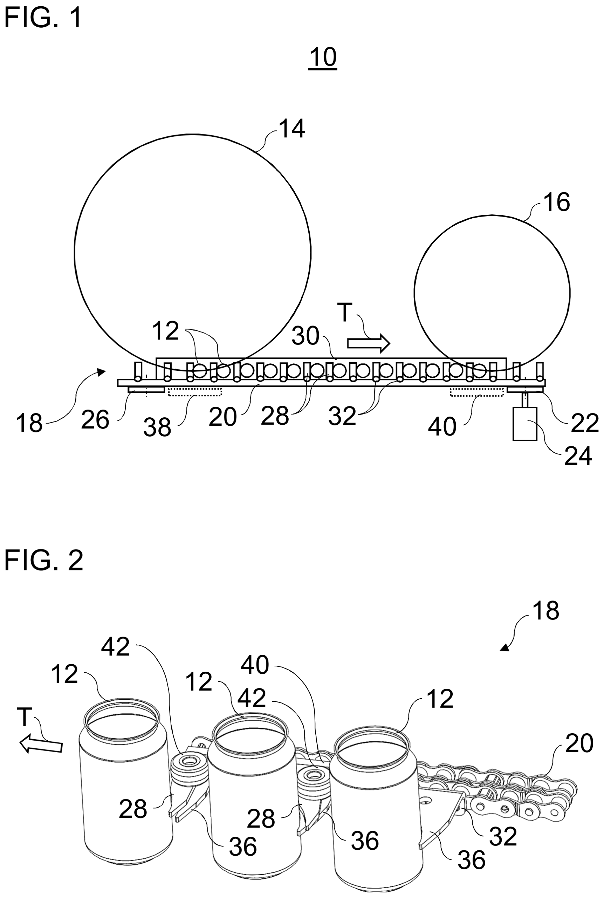

Die Figur 1 zeigt eine Behälterbehandlungsanlage 10 zum Behandeln von Behältern 12 (nur einige in Figur 1 dargestellt). Bevorzugt sind die Behälter 12 als Dosen ausgeführt, bzw. die Behälterbehandlungsanlage 10 ist eine Dosenbehandlungsanlage.

Die Behälterbehandlungsanlage 10 weist einen Förderer 18 zum Transportieren der Behälter 12 auf. Die Behälterbehandlungsanlage 10 kann ferner bspw. eine Füllvorrichtung 14 und/oder eine Verschließvorrichtung 16 aufweisen.

Die Füllvorrichtung 14 kann die Behälter 12 füllen, vorzugsweise mit einem flüssigen oder pastösen Medium. Die Füllvorrichtung 14 ist vorzugsweise als eine Rundläufer-Füllvorrichtung ausgeführt. Die Füllvorrichtung 14 kann mehrere Füllstationen zum gleichzeitigen bzw. zeitlich überlappenden Befüllen mehrerer Behälter 12 aufweisen. Bspw. können die Füllstationen verteilt um einen Umfang eines Füllerkarussells der Rundläufer-Füllvorrichtung herum angeordnet sein.

Die Verschließvorrichtung 16 kann die Behälter 12 verschließen, z. B. mit einem Deckel, einem Korken, einem Kronkorken oder einem Schraubverschluss. Die Verschließvorrichtung 16 kann vorzugsweise als eine Rundläufer-Verschließvorrichtung ausgeführt sein. Die Verschließvorrichtung 16 kann mehrere Verschließstationen zum gleichzeitigen bzw. zeitlich überlappenden Verschließen mehrerer Behälter 12 aufweisen. Bspw. können die Verschließstationen verteilt um einen Umfang eines Verschließerkarussells der Rundläufer-Verschließvorrichtung herum angeordnet sein. Die Verschließvorrichtung 16 kann bezüglich eines Behälterstroms stromabwärts von der Füllvorrichtung 14 angeordnet sein.

Nachfolgend ist der Förderer 18 allgemein unter Bezugnahme auf die Figur 1 und in einem besonders bevorzugten Ausführungsbeispiel unter Bezugnahme auf die Figuren 2 bis 4 erläutert.

Der Förderer 18 kann die Behälter 12 in einer Transportrichtung T transportieren, zum Beispiel von der Füllvorrichtung 14 zu der Verschließvorrichtung 16. Der Förderer 18 kann die Füllvorrichtung 14 und die Verschließvorrichtung 16 zum Transportieren von Behältern 12 von der Füllvorrichtung 14 zu der Verschließvorrichtung 16 miteinander, vorzugsweise direkt, verbinden.

Der Förderer 18 kann mit der Füllvorrichtung 14 zum Übernehmen von Behältern 12 von der Füllvorrichtung 14 verbunden sein, vorzugsweise direkt. Der Förderer 18 kann mit der Verschließvorrichtung 16 zum Übergeben der übernommenen Behälter 12 an die Verschließvorrichtung 16 verbunden sein, vorzugsweis direkt.

Es ist auch möglich, dass der Förderer 18 die Behälter 12 nicht direkt von der Füllvorrichtung 14 übernimmt, sondern bspw. von einem Auslaufstern, der direkt mit der Füllvorrichtung 14 verbunden ist. Es ist ebenfalls möglich, dass der Förderer 18 die Behälter 12 nicht direkt an die Verschließvorrichtung 16 übergibt, sondern bspw. an einen Einlaufstern, der direkt mit der Verschließvorrichtung 16 verbunden ist.

Der Förderer 18 kann seitliche Führungsgeländer zum seitlichen Führen der transportierten Behälter 12 aufweisen.

Der Förderer 18 weist ein umlaufendes Transportelement 20 und mehrere (z. B. Dosen-) Mitnehmer 28 auf. Der Förderer 18 kann bspw. noch ein Antriebsrad 22, eine Antriebseinrichtung 24, ein Umlenkrad 26, mehrere Verbinder 32, mehrere weitere Mitnehmer 36 (nur in den Figuren 2 bis 4 dargestellt) und/oder mindestens eine Betätigungseinrichtung 38, 40 aufweisen.

Das Transportelement 20 kann ein geschlossenes Transportelement bzw. ein Endlos-Transportelement sein. Das Transportelement 20 kann bspw. das Antriebsrad 22 und das Umlenkrad 26 umlaufen. Bevorzugt ist das Transportelement 20 eine Transportkette. Das Transportelement 20 kann die Behälter 12 mittels der Mitnehmer 28 und/oder 36 transportieren.

Das Antriebsrad 22 kann antreibend mit dem umlaufenden Transportelement 20 verbunden sein. Beispielsweise kann das Antriebsrad 22 als ein Antriebsritzel im Eingriff mit dem umlaufenden Transportelement 20 sein. Bevorzugt kann das Antriebsrad 22 ein Antriebskettenrad im Eingriff mit dem als Transportkette ausgeführten Transportelement 20 sein.

Bevorzugt ist das Antriebsrad 22 an einem der Verschließvorrichtung 16 zugeordneten Ende des Förderers 18 angeordnet. Vorzugsweise erfolgt im Bereich des Antriebsrads 22 oder direkt angrenzend daran eine Übergabe der Behälter 12 von dem Förderer 18 zu der Verschließvorrichtung 16. Alternativ kann das Antriebsrad 22 an einer anderen Position des Förderers 18 angeordnet sein, z. B. an einem der Füllvorrichtung 14 zugeordneten Ende des Förderers 18.

Die Antriebseinrichtung 24 kann antreibend mit dem Antriebsrad 22 verbunden sein. Bevorzugt kann die Antriebseinrichtung 24 als ein Elektromotor ausgeführt sein. Die Antriebseinrichtung 24 kann beispielsweise direkt oder über ein Getriebe mit dem Antriebsrad 22 zum Antreiben des Antriebsrads 22 verbunden sein.

Das Umlenkrad 26 kann mit dem Transportelement 20 zum Umlenken des Transportelements 20 verbunden sein. Beispielsweise kann das Umlenkrad 26 als ein Umlenkritzel im Eingriff mit dem umlaufenden Transportelement 20 sein. Bevorzugt kann das Umlenkrad 26 ein Umlenkkettenrad (Leerlaufkettenrad) im Eingriff mit dem als Transportkette ausgeführten Transportelement 20 sein.

Bevorzugt ist das Umlenkrad 26 an einem der Füllvorrichtung 14 zugeordneten Ende des Förderers 18 angeordnet. Vorzugsweise erfolgt im Bereich des Umlenkrads 26 oder direkt angrenzend daran eine Übernahme der Behälter 12 von der Füllvorrichtung 14 zu dem Förderer 18. Alternativ kann das Umlenkrad 26 an einer anderen Position des Förderers 18 angeordnet sein, z. B. an einem der Verschließvorrichtung 16 zugeordneten Ende des Förderers 18.

Vorzugsweise können das Antriebsrad 22 und das Umlenkrad 26 an einander entgegengesetzten Enden des Förderers 18 angeordnet sein.

Die Mitnehmer 28 können die Behälter 12 transportieren bzw. mitnehmen. Bevorzugt kann jeder Mitnehmer 28 jeweils (nur) einen der Behälter 12 transportieren. Die Mitnehmer 28 können die Behälter 12 zum Transportieren rückseitig abstützen.

Beispielsweise können die Mitnehmer 28 jeweils eine Ausnehmung (Tasche) für einen Behälter 12 aufweisen. Die Ausnehmung kann beispielsweise zylindermantelsegmentförmig sein. Die Ausnehmung kann an einer in Transportrichtung T des Förderers 18 gewandten Seite des jeweiligen Mitnehmer 28 angeordnet sein.

Die Mitnehmer 28 sind voneinander beabstandet entlang des umlaufenden Transportelements 20 angeordnet. Die Mitnehmer 28 können bevorzugt äquidistant zueinander entlang des Transportelements 20 angeordnet sein. Beispielsweise können die Mitnehmer 28 seitlich neben dem umlaufenden Transportelement 20 angeordnet sein.

Ein Abstand benachbarter Mitnehmer 28 zueinander kann auch als eine sogenannte Teilung/Maschinenteilung bzw. ein sogenannter Teilungsabstand (für den Behältertransport) bezeichnet werden. Die Teilung kann beispielsweise in einem Bereich zwischen 70 mm und 110 mm liegen.

Beispielsweise können die Mitnehmer 28 die Behälter 12 über eine stationäre Stützfläche 30, z. B. einen Tisch, des Förderers 18 schieben. Die Stützfläche 30 kann sich vorzugsweise von der Füllvorrichtung 14 zu der Verschließvorrichtung 16 erstrecken.

Alternativ können die Behälter 12 bspw. auf einem umlaufenden Stützelement, z. B. ein Band oder eine Mattenkette, des Förderers 18 bodenseitig abgestützt sein, während die Behälter 12 von den Mitnehmern 28 jeweils umfangsseitig (mantelseitig / rückseitig) abgestützt sind (nicht in Figur 1 dargestellt). Es ist möglich, dass das umlaufende Stützelement mit dem Transportelement 20 zum Antreiben mittels des Transportelements 20 verbunden ist.

Vorzugsweise können die Mitnehmer 28 im Bereich des Zugtrums (Arbeitstrums) des Transportelements 20 oberhalb und vertikal beabstandet von der Stützfläche 30 bzw. dem umlaufenden Stützelement des Förderers 18 positioniert sein.

Bevorzugt können die Mitnehmer 28 als Kragarme oder Anlagefinger ausgebildet sein. Die Kragarme/Anlagefinger können die Stützfläche 30 quer zur Transportrichtung T des Förderers 18 überspannen.

Die Mitnehmer 28 sind an dem Transportelement 20 zum Mitnehmen der Behälter 12, z. B. direkt oder indirekt, angebracht. Bevorzugt trägt das umlaufende Transportelement 20 die Mitnehmer 28.

Eine Besonderheit des Förderers 18 besteht darin, dass die Mitnehmer 28 relativ zu dem Transportelement 20 bewegbar sind. Vorzugsweise kann die Bewegbarkeit dazu genutzt werden, die Behälter 12 beim Übernehmen zu dem Förderer 18 und/oder beim Übergeben von dem Förderer 18 relativ zu dem Transportelement 20 zu bewegen, um bspw. die Übernahme und/oder die Übergabe zu verbessern.

Bevorzugt können die Mitnehmer 28 relativ zu dem Transportelement 20 verschwenkbar sein. Vorzugsweise können die Mitnehmer 28 jeweils um eine Hochachse schwenkbar sein. Die Hochachsen können senkrecht zu einer Horizontalebene ausgerichtet sein.

Es ist alternativ oder zusätzlich möglich, dass die Mitnehmer 28 relativ zu dem Transportelement 20 verschiebbar (translatorisch bewegbar) sind. Vorzugsweise können die Mitnehmer 28 relativ zu dem Transportelement 20 in und entgegen einer Transportrichtung T des Förderers 18 verschiebbar sein.

Bevorzugt sind die Mitnehmer 28 über mehrere Verbinder 32 bewegbar mit dem Transportelement 20 verbunden. Die Verbinder 32 können jeweils einen der Mitnehmer 28 an dem Transportelement 20 anbringen. Die Verbinder 32 können voneinander beabstandet entlang des Transportelements 20 angeordnet sein.

Bevorzugt sind die Verbinder 32 unbewegbar mit dem Transportelement 20 verbunden. Die Verbinder 32 können an dem Transportelement 20 unbewegbar bzw. starr befestigt sein. Beispielsweise können die Verbinder 32 lösbar an dem Transportelement 20 angebracht sein. Beispielsweise können die Verbinder 32 jeweils mittels mindestens einer Schraub-, Steck,- Rast- oder Klemmverbindung lösbar an dem Transportelement 20 angebracht sein, zum Beispiel durch Kettenglieder des Transportelements 20 hindurch.

Bevorzugt können die Verbinder 32 einen ersten Schenkel und einen zweiten Schenkel aufweisen, die winkelig zueinander angeordnet sind, zum Beispiel in einem Winkel von rund 90°. Vorzugsweise kann der erste Schenkel an einer Längsaußenseite des Transportelements 20 fest angebracht sein. Vorzugsweise kann der zweite Schenkel horizontal ausgerichtet sein und einen jeweiligen Mitnehmer 28 tragen. Beispielsweise können der erste Schenkel und der zweite Schenkel gemeinsam eine L-Form des Verbinder 32 bilden.

Bevorzugt sind die Mitnehmer 28 jeweils an einem der mehreren Verbinder 32 bewegbar gelagert. Beispielsweise können die Mitnehmer 28 jeweils verschwenkbar und/oder verschiebbar mit einem jeweiligen Verbinder 32 verbunden sein, z. B. an dessen jeweiligen zweiten Schenkel.

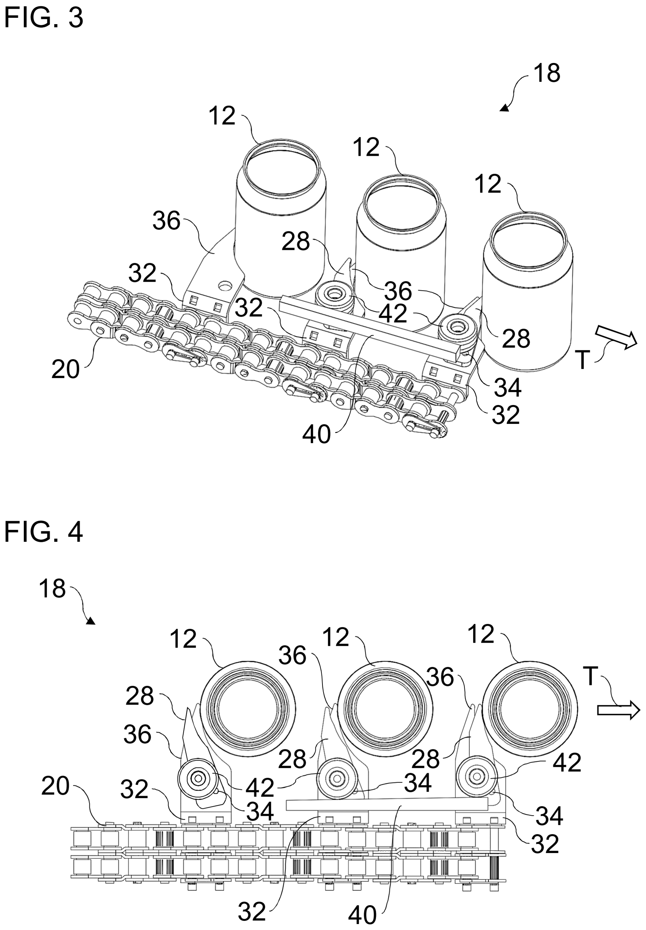

Die Verschwenkbarkeit besteht bevorzugt senkrecht zu einer Transportrichtung T des Förderers 18 und vorzugsweise senkrecht zu einer Horizontalebene. Beispielsweise können die Mitnehmer 28 jeweils um eine Schwenkachse 34 verschwenkbar sein (siehe Figuren 3 und 4). Die Schwenkachse 34 kann beispielsweise in oder an dem jeweiligen Verbinder 32 gehalten sein. Beispielsweise kann die Schwenkachse 34 in einem Durchgangsloch an dem jeweiligen Verbinder 32 gehalten, zum Beispiel eingeschraubt, sein. Die Schwenkachse 34 kann beispielsweise als Zapfen oder Stift ausgeführt sein. Bevorzugt ist die Schwenkachse senkrecht ausgerichtet.

Die Verschiebbarkeit besteht bevorzugt parallel zu einer Transportrichtung T des Förderers 18. Beispielsweise können die Mitnehmer 28 jeweils entlang einer Längsführung verschiebbar sein, die in oder an den jeweiligen Verbinder 32 angeordnet ist. Die Längsführung kann beispielsweise als eine Längsnut, ein Langloch oder ein Längskanal ausgeführt sein. Bevorzugt ist die Längsführung parallel zu der Transportrichtung T.

Wie beispielhaft in den Figuren 2 bis 4 dargestellt ist, kann der Förderer 18 mehrere weitere Mitnehmer 36 aufweisen. Jeweils ein Mitnehmer 28 und ein weiterer Mitnehmer 36 können gemeinsam ein Mitnehmerpaar zum gemeinsamen Mitnehmen eines Behälters 12 bilden. Der jeweilige Mitnehmer 28 und der jeweilige weitere Mitnehmer 36 können übereinander angeordnet sein, zum Beispiel mit den Mitnehmer 28 über dem weiteren Mitnehmer 36 oder andersherum.

Entsprechend können die weiteren Mitnehmer 36 voneinander beabstandet entlang des Transportelements 20 angeordnet sein.

Die weiteren Mitnehmer 36 sind bevorzugt unbewegbar (fest) mit dem Transportelement 20 verbunden. Bevorzugt sind die weiteren Mitnehmer 36 über die Verbinder 32 unbewegbar mit dem Transportelement 20 verbunden. Besonders bevorzugt sind die weiteren Mitnehmer 36 jeweils integral-einstückig mit einem der Verbinder 32 verbunden. Beispielsweise können die weiteren Mitnehmer 36 von dem jeweiligen Verbinder 32 auskragen, zum Beispiel in einer Richtung weg von dem Transportelement 20.

Beispielsweise können die weiteren Mitnehmer 36 jeweils eine Ausnehmung (Tasche) für einen der Behälter 12 aufweisen. Die Ausnehmung kann beispielsweise zylindermantelsegmentförmig sein. Die Ausnehmung kann an einer in Transportrichtung T des Förderers 18 gewandten Seite des jeweiligen weiteren Mitnehmer 36 angeordnet sein.

Ein Abstand benachbarter weiterer Mitnehmer 36 zueinander kann auch als eine sogenannte Teilung/Maschinenteilung bzw. ein sogenannter Teilungsabstand (für den Behältertransport) bezeichnet werden. Die Teilung kann beispielsweise in einem Bereich zwischen 70 mm und 110 mm liegen.

Die mindestens eine Betätigungseinrichtung 38, 40 ist mit den Mitnehmern 28 zum Bewirken eines Bewegens des jeweiligen Mitnehmers 28 relativ zu dem Transportelement 20 in Wirkverbindung bringbar.

Beispielsweise können die Mitnehmer 28 jeweils mit einem Steuerelement 42 zum Auslösen des Bewegens relativ zu dem Transportelement 20 verbunden sein. Beispielsweise kann jeder Mitnehmer 28 ein Steuerelement 42 tragen. Das Steuerelement 42 kann in Wirkverbindung mit der mindestens einen Betätigungseinrichtung 38, 40 bringbar sein, um das Bewegen des jeweiligen Mitnehmers 28 relativ zu dem Transportelement 20 zu bewirken.

Die mindestens eine Betätigungseinrichtung 38, 40 kann auf jegliche denkbare Weise ausgeführt sein. Beispielsweise kann die mindestens eine Betätigungseinrichtung 38, 40 als eine mechanische, pneumatische, hydraulische, elektrische oder elektromagnetische Betätigungseinrichtung ausgeführt sein.

Bevorzugt kann die mindestens eine Betätigungseinrichtung 38, 40 eine Steuerkurve (siehe Figuren 2 bis 4) oder einen Steuernocken aufweisen. Die Steuerkurve bzw. der Steuernocken ist bevorzugt stationär. Beispielsweise kann eine Steuerkurve bzw. ein Steuernocken an einem Behälterauslaufabschnitt des Förderers 18 angeordnet sein (siehe Betätigungseinrichtung 40 in Figur 1). Alternativ oder zusätzlich kann eine Steuerkurve bzw. ein Steuernocken an einem Behältereinlaufabschnitt des Förderers 18 angeordnet sein (siehe Betätigungseinrichtung 38 in Figur 1). Beim Passieren der Steuerkurve bzw. des Steuernockens können die Mitnehmer 28 zum Bewegen relativ zu dem Transportelement 20 beaufschlagt werden. In einem solchen Ausführungsbeispiel kann das Steuerelement 42 bevorzugt als ein Steuerkurvenfolger, zum Beispiel eine drehbare Steuerkurvenrolle oder ein Gleitstück, zum Folgen der Steuerkurve oder Steuernockens ausgebildet sein. Beispielsweise kann eine Drehachse der Steuerkurvenrolle parallel beabstandet zu der Schwenkachse 34 sein.

Alternativ kann die mindestens eine Betätigungseinrichtung 38, 40 beispielsweise einen Aktor je Mitnehmer 28 aufweisen. Der Aktor kann mit dem jeweiligen Mitnehmer 28 zum Bewegen, z. B. Verschwenken und/oder Verschieben, des jeweiligen Mitnehmers 28 relativ zu dem Transportelement 20 verbunden sein. Beispielsweise können die Aktoren von den Verbindern 32 getragen oder in diese integriert sein. Beispielsweise können die Aktoren als Elektroantriebe ausgeführt sein.

Es ist bspw. möglich, dass mindestens eine Betätigungseinrichtung 38 dazu konfiguriert ist, die Mitnehmer 28 in einem Behältereinlaufabschnitt des Förderers 18 entgegen einer Transportrichtung T des Förderers 18 relativ zu dem Transportelement 20 zu bewegen. Damit können die Behälter 12 im Behältereinlaufabschnitt beim Übernehmen, zum Beispiel von der Füllvorrichtung 14, von den sich bewegenden Mitnehmern 28 mit einer Transportgeschwindigkeit übernommen werden, die kleiner ist als eine Transportgeschwindigkeit des Transportelements 20.

Alternativ oder zusätzlich ist es bspw. möglich, dass mindestens eine Betätigungseinrichtung 40 dazu konfiguriert ist, die Mitnehmer 28 in einem Behälterauslaufabschnitt des Förderers 18 in einer Transportrichtung T des Förderers 18 relativ zu dem Transportelement 20 zu bewegen. Damit können die Behälter 12 im Behälterauslaufabschnitt beim Übergeben, zum Beispiel zu der Verschließvorrichtung 16, von den sich bewegenden Mitnehmern 28 mit einer Transportgeschwindigkeit übergeben werden, die größer ist als eine Transportgeschwindigkeit des Transportelements 20.

Es ist möglich, dass die Mitnehmer 28 elastisch vorgespannt sind, vorzugsweise entgegen ihrer jeweiligen Bewegbarkeit. Beispielsweise können die Mitnehmer 28 jeweils über eine Feder, vorzugsweise Schraubenfeder oder Spiralfeder, elastisch vorgespannt sein. Beispielsweise kann die Feder in oder an dem Verbinder 32 oder dem Steuerelement 42 angeordnet sein. Vorteilhaft können sich die Mitnehmer 28 aufgrund der elastischen Vorspannung nur bei entsprechender Betätigung mittels der mindestens einen Betätigungseinrichtung 38, 40 relativ zu dem Transportelement 20 bewegen.

Nachfolgend sind bevorzugte Ausführungsbeispiele eines Betriebs des beispielhaften Förderers 18 beschrieben.

Der Förderer 18 transportiert die Behälter 12, bevorzugt von der Füllvorrichtung 14 und/oder zu der Verschließvorrichtung 16. Die Behälter 12 können beim Transportieren von den Mitnehmern 28 und/oder den weiteren Mitnehmern 36 (sofern vorhanden) mitgenommen, z. B. angeschoben, werden.

Bevorzugt am Anfang oder am Ende des Transportierens können die Behälter 12 relativ zu dem Transportelement 20 durch Bewegen, z. B. Verschwenken und/oder Verschieben, der Mitnehmer 28 relativ zu dem Transportelement 20 bewegt werden, und zwar überlagert zu dem Transportieren. Das Bewegen der Behälter 12 erfolgt vorzugsweise parallel zu einer Längserstreckung des Transportelements 20 und/oder parallel zu einer Transportrichtung T des Förderers 18.

Beim Bewegen können die Behälter 12 in der Transportrichtung T relativ zu dem Transportelement 20 beschleunigt oder verzögert werden.

Dadurch kann im Behältereinlaufabschnitt des Förderers 18 eine Transportgeschwindigkeitsdifferenz zwischen dem Förderer 18 (dem Transportelement 20) und bspw. der Füllvorrichtung 14, von der die Behälter 12 von dem Förderer 18 übernommen werden, zumindest teilweise kompensiert werden. Beispielsweise können sich die Mitnehmer 28 beim Übernehmen der Behälter 12 relativ zu dem Transportelement 20 entgegen einer Transportrichtung T des Förderers 18 zum Verzögern des jeweiligen Mitnehmers 28 relativ zu dem Transportelement 20 bewegen.

Alternativ oder zusätzlich kann im Behälterauslaufabschnitt des Förderers 18 eine Transportgeschwindigkeitsdifferenz zwischen dem Förderer 18 (dem Transportelement 20) und bspw. der Verschließvorrichtung 16, zu der die Behälter 12 von dem Förderer 18 übergeben werden, zumindest teilweise kompensiert werden. Beispielsweise können sich die Mitnehmer 28 beim Übergeben der Behälter 12 relativ zu dem Transportelement 20 in einer Transportrichtung T des Förderers 18 zum Beschleunigen des jeweiligen Mitnehmers 28 und des jeweils mitgenommenen Behälters 12 relativ zu dem Transportelement 20 bewegen.

Es ist möglich, dass die Mitnehmer 28 die Behälter 12 nur beim Bewegen des jeweiligen Mitnehmers 28 im Behälterauslaufabschnitt und/oder nur beim Bewegen des jeweiligen Mitnehmers 28 im Behältereinlaufabschnitt des Förderers 18 berühren/abstützen. Das Transportieren der Behälter von dem Behältereinlaufabschnitt zu dem Behälterauslaufabschnitt kann hingegen mittels der weiteren Mitnehmer 36 erfolgen, die die Behälter 12 dazu jeweils berühren/abstützen.

Es ist auch möglich, dass die Mitnehmer 28 die Behälter 12 auch beim Transportieren der Behälter von dem Behältereinlaufabschnitt zu dem Behälterauslaufabschnitt berühren/abstützten, z. B. wenn die weiteren Mitnehmer 36 gar nicht umfasst sind.

Besonders bevorzugt ist, dass die Mitnehmer 28 die Behälter 12 nur beim Bewegen des jeweiligen Mitnehmers 28 im Behälterauslaufabschnitt berühren/abstützen und die Behälter 12 sonst von den weiteren Mitnehmern 36 berührt/abgestützt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Transportelements und/oder der mehreren Mitnehmer des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Behälterbehandlungsanlage
- 12: Behälter
- 14: Füllvorrichtung
- 16: Verschließvorrichtung
- 18: Förderer
- 20: Transportelement
- 22: Antriebsrad
- 24: Antriebseinrichtung
- 26: Umlenkrad
- 28: Mitnehmer
- 30: Stützfläche
- 32: Verbinder
- 34: Schwenkachse
- 36: weiterer Mitnehmer
- 38: Betätigungseinrichtung
- 40: Betätigungseinrichtung
- 42: Steuerelement

- T: Transportrichtung

## Patentansprüche

1. Förderer (18) zum Behältertransport, vorzugsweise Dosentransport, für eine Behälterbehandlungsanlage (10), wobei der Förderer (18) aufweist:
ein umlaufendes Transportelement (20), vorzugsweise Transportkette; und
mehrere Mitnehmer (28), die voneinander beabstandet entlang des umlaufenden Transportelements (20) angeordnet sind und die an dem umlaufenden Transportelement (20) zum Mitnehmen von Behältern (12), vorzugsweise jeweils eines Behälters (12), angebracht sind,
wobei:
die mehreren Mitnehmer (28) relativ zu dem umlaufenden Transportelement (20) bewegbar sind.

2. Förderer (18) nach Anspruch 1, wobei mindestens eines erfüllt ist von:
die mehreren Mitnehmer (28) sind relativ zu dem umlaufenden Transportelement (20) verschwenkbar, vorzugsweise um eine jeweilige Hochachse; und
die mehreren Mitnehmer (28) sind relativ zu dem umlaufenden Transportelement (20) verschiebbar, vorzugsweise in und entgegen einer Transportrichtung (T) des Förderers (18).

3. Förderer (18) nach Anspruch 1 oder Anspruch 2, wobei:
die mehreren Mitnehmer (28) jeweils als, vorzugsweise schwenkbar und/oder verschiebbar gelagerte, Kragarme oder Anlagefinger ausgebildet sind.

4. Förderer (18) nach einem der vorherigen Ansprüche, ferner aufweisend:
mehrere Verbinder (32), die voneinander beabstandet entlang des umlaufenden Transportelements (20) angeordnet sind und die mehreren Mitnehmer (28) an dem umlaufenden Transportelement (20) anbringen, vorzugsweise jeweils einen der mehreren Mitnehmer (28).

5. Förderer (18) nach Anspruch 4, wobei mindestens eines erfüllt ist von:
die mehreren Verbinder (32) sind fest mit dem umlaufenden Transportelement (20) verbunden, vorzugsweise lösbar, besonders bevorzugt durch Kettenglieder des umlaufenden Transportelements (20) hindurch; und
die mehreren Mitnehmer (28) sind jeweils an mindestens einem der mehreren Verbinder (32) bewegbar, vorzugsweise verschwenkbar und/oder verschiebbar, gelagert.

6. Förderer (18) nach einem der vorherigen Ansprüche, ferner aufweisend:
mehrere weitere Mitnehmer (36), die voneinander beabstandet entlang des umlaufenden Transportelements (20) angeordnet sind und die mit dem umlaufenden Transportelement (20) zum Mitnehmen der Behälter (12), vorzugsweise jeweils eines Behälters (12), fest verbunden sind,
wobei:
jeweils einer der Mitnehmer (28) und einer der weiteren Mitnehmer (36) ein Mitnehmerpaar zum Mitnehmen eines der Behälter (12) bilden; und optional
der Mitnehmer (28) und der weitere Mitnehmer (36) je Mitnehmerpaar übereinander angeordnet sind.

7. Förderer (18) nach Anspruch 6 und nach Anspruch 4 oder 5, wobei mindestens eines erfüllt ist von:
die weiteren Mitnehmer (36) sind jeweils fest, vorzugsweise integral-einstückig, mit mindestens einem jeweiligen Verbinder (32) verbunden, vorzugsweise auskragend von dem jeweiligen Verbinder (32); und
der Mitnehmer (28) und der weitere Mitnehmer (36) je Mitnehmerpaar wirken derart zusammen, dass:
- der Mitnehmer (28) den jeweils transportierten Behälter (12) nur in einem Behältereinlaufabschnitt und/oder nur in einem Behälterauslaufabschnitt des Förderers (18) abstützt; und/oder
- der weitere Mitnehmer (36) den jeweils transportierten Behälter (12) außerhalb von einem Behältereinlaufabschnitt und/oder einem Behälterauslaufabschnitt des Förderers (18), abstützt.

8. Förderer (18) nach einem der vorherigen Ansprüche, ferner aufweisend:
mindestens eine, vorzugsweise stationäre, Betätigungseinrichtung (38, 40), die mit den mehreren Mitnehmern (28) zum Bewirken eines Bewegens des jeweiligen Mitnehmers (28) relativ zu dem umlaufenden Transportelement (20) in Wirkverbindung bringbar ist.

9. Förderer (18) nach Anspruch 8, wobei die mindestens eine Betätigungseinrichtung (38, 40) aufweist:
mindestens eine Steuerkurve, die die mehreren Mitnehmer (28) beim Passieren zum Bewegen relativ zu dem umlaufenden Transportelement (20) beaufschlagt; oder
mindestens einen Steuernocken, der die mehreren Mitnehmer (28) beim Passieren zum Bewegen relativ zu dem umlaufenden Transportelement (20) beaufschlagt; oder
einen Aktor, vorzugsweise Elektroantrieb, je Mitnehmer (28), wobei der Aktor mit dem jeweiligen Mitnehmer (28) zum Bewegen des jeweiligen Mitnehmers (28) verbunden ist.

10. Förderer (18) nach Anspruch 8 oder Anspruch 9, wobei mindestens eines erfüllt ist von:
die mindestens eine Betätigungseinrichtung (38, 40) ist dazu konfiguriert, die mehreren Mitnehmer (28), vorzugsweise in einem Behälterauslaufabschnitt des Förderers (18), in einer Transportrichtung (T) des Förderers (18) relativ zu dem umlaufenden Transportelement (20) zu bewegen, zum Beschleunigen des jeweils mitgenommenen Behälters (12) relativ zu dem umlaufenden Transportelement (20); und
die mindestens eine Betätigungseinrichtung (38, 40) ist dazu konfiguriert, die mehreren Mitnehmer (28), vorzugsweise in einem Behältereinlaufabschnitt des Förderers (18), entgegen einer Transportrichtung (T) des Förderers (18) relativ zu dem umlaufenden Transportelement (20) zu bewegen, zum Verzögern des jeweils mitgenommenen Behälters (12) relativ zu dem umlaufenden Transportelement (20).

11. Förderer (18) nach einem der vorherigen Ansprüche, wobei:
die mehreren Mitnehmer (28) jeweils mit einem Steuerelement (42) zum Auslösen des Bewegens relativ zu dem umlaufenden Transportelement (20) verbunden sind, wobei vorzugsweise mindestens eines erfüllt ist von:
das Steuerelement (40) ist ein Steuerkurvenfolger, bevorzugt eine drehbare Steuerrolle oder ein Gleitstück, zum Folgen einer Steuerkurve oder eines Steuernockens zum Bewirken des Bewegens relativ zu dem umlaufenden Transportelement (20); und
die mehreren Mitnehmer (28) tragen das jeweilige Steuerelement (42), vorzugsweise oberseitig oder unterseitig.

12. Behälterbehandlungsanlage (10), vorzugsweise Dosenbehandlungsanlage, wobei die Behälterbehandlungsanlage (10) aufweist:
eine erste Vorrichtung, vorzugsweise Füllvorrichtung (14) zum Füllen von Behältern (12);
eine zweite Vorrichtung, vorzugsweise Verschließvorrichtung (16) zum Verschließen der Behälter (12); und
einen Förderer (18) nach einem der vorherigen Ansprüche, wobei der Förderer (18) mit der ersten Vorrichtung zum Übernehmen der Behälter (12) von der ersten Vorrichtung und mit der zweiten Vorrichtung zum Übergeben der übernommenen Behälter (12) an die zweite Vorrichtung verbunden ist,
wobei optional:
eine Teilung der ersten Vorrichtung und eine Teilung der zweiten Vorrichtung unterschiedlich sind, und vorzugsweise
eine Teilung des Förderers (18) zwischen der Teilung der ersten Vorrichtung und der Teilung der zweiten Vorrichtung liegt.

13. Verfahren zum Betreiben eines Förderers (18) nach einem der Ansprüche 1 bis 11 oder einer Behälterbehandlungsanlage (10) nach Anspruch 12, wobei das Verfahren aufweist:
Transportieren der Behälter (12) mittels des Förderers (18), vorzugsweise von einer Füllvorrichtung (14) zum Füllen der Behälter (12) zu einer Verschließvorrichtung (16) zum Verschließen der Behälter (12); und
Bewegen der Behälter (12) relativ zu dem umlaufenden Transportelement (20) während des Transportierens, vorzugsweise am Ende und/oder am Anfang des Transportierens des jeweiligen Behälters (12), durch Bewegen, vorzugsweise Verschwenken und/oder Verschieben, der Mitnehmer (28) relativ zu dem umlaufenden Transportelement (20).

14. Verfahren nach Anspruch 13, wobei mindestens eines erfüllt ist von:
beim Bewegen werden die Behälter (12) relativ zu dem umlaufenden Transportelement (20) in einer Transportrichtung (T) des umlaufenden Transportelements (20) beschleunigt oder verzögert;
das Bewegen der Behälter (12) relativ zu dem umlaufenden Transportelement (20) erfolgt parallel zu einer Längserstreckung des Transportelements (20) und/oder parallel zu einer Transportrichtung (T) des Förderers (18); und
das Bewegen der Behälter (12) relativ zu dem umlaufenden Transportelement (20) erfolgt derart, dass:
- eine Transportgeschwindigkeitsdifferenz zwischen dem Förderer (18) und einer ersten Vorrichtung, von der die Behälter (12) von dem Förderer (18) übernommen werden, zumindest teilweise kompensiert wird; und/oder
- eine Transportgeschwindigkeitsdifferenz zwischen dem Förderer und einer zweiten Vorrichtung, an die die Behälter (12) von dem Förderer (18) übergeben werden, zumindest teilweise kompensiert wird.

15. Verfahren nach Anspruch 13 oder Anspruch 14, wobei mindestens eines erfüllt ist von:
das Bewegen der Mitnehmer (28) relativ zu dem umlaufenden Transportelement (20) erfolgt beim Übernehmen der Behälter (12), vorzugsweise von der Füllvorrichtung (14), entgegen einer Transportrichtung (T) des Förderers (18), vorzugsweise zum Verzögern des Mitnehmers (28) relativ zu dem umlaufenden Transportelement (20);
das Bewegen der Mitnehmer (28) relativ zu dem umlaufenden Transportelement (20) erfolgt beim Übergeben der Behälter (12), vorzugsweise an die Verschließvorrichtung (16), in der Transportrichtung (T) des Förderers (18), vorzugsweise zum Beschleunigen des Mitnehmers (28) relativ zu dem umlaufenden Transportelement (20); und
das Transportieren der Behälter (12) von einem Behältereinlaufabschnitt des Förderers (18) zu einem Behälterauslaufabschnitt des Förderers (18) erfolgt mittels mehrerer weiterer Mitnehmer (36) des Förderers (18), die voneinander beabstandet entlang des umlaufenden Transportelements (20) angeordnet sind und die mit dem umlaufenden Transportelement (20) zum Mitnehmen der Behälter (12), vorzugsweise jeweils eines Behälters (12), fest verbunden sind.
